# EUROPÄISCHE PATENTANMELDUNG

(11) **EP 4 239 277 A1**
(43) Veröffentlichungstag der Anmeldung: **06.09.2023**
(21) Anmeldenummer: 23158297.4
(22) Anmeldetag: 23.02.2023
(51) Int. Cl.: F41G 3/02, F41G 7/00, F41G 7/22, G06T 7/30, G06V 10/24

(54) **VORRICHTUNG UND VERFAHREN ZUR ZIELÜBERGABE**

(30) Priorität: 01.03.2022 DE 102022000723
(71) Anmelder: Diehl Defence GmbH & Co. KG, 88662 ÜBERLINGEN (DE)
(72) Erfinder: Gagel, Florian, 88690 Uhldingen-Mühlhofen (DE)
(74) Vertreter: Diehl Patentabteilung

(57) **Zusammenfassung**

Vorrichtung (1) zur Zielübergabe von einem Aufklärungssystem (4), welches ein Bildaufnahmegerät zur Aufnahme eines Aufklärungsbilds (6) einer Zielumgebung (2) umfasst, an ein Wirkmittelsystem (5), welches ein Wirkmittel (8) mit einem Bildaufnahmegerät zur Aufnahme eines Wirkmittelbilds (9) der Zielumgebung (2) umfasst, wobei die Vorrichtung (1) dazu ausgebildet ist, ein in einem Aufklärungsbild (6) der Zielumgebung (2) erfasstes Ziel (3) an das Wirkmittelsystem (5) zu übergeben, wobei die Vorrichtung (1) eine Steuerungseinrichtung aufweist, die dazu ausgebildet ist, vor Aussenden des Wirkmittels (8) anhand einer vorberechneten Trajektorie des Wirkmittels (8) ein zu erwartendes Wirkmittelbild (10) der Zielumgebung (2) zu bestimmen, welches einem durch das Wirkmittel (8) des Wirkmittelsystems (5) erfassten Wirkmittelbild (9) bei einer tatsächlichen Annäherung des Wirkmittels (8) an die Zielumgebung (2) entsprechen würde und die anhand des Aufklärungsbilds (6) bestimmten Zielkoordinaten des Ziels (3) in dem Aufklärungsbild (6) basierend auf einer Transformation in das entsprechend bestimmte, zu erwartende Wirkmittelbild zu übertragen.

## Beschreibung

Die Erfindung betrifft eine Vorrichtung zur Zielübergabe von einem Aufklärungssystem, welches ein Bildaufnahmegerät zur Aufnahme eines Aufklärungsbilds einer Zielumgebung umfasst, an ein Wirkmittelsystem, welches eine Wirkmittel mit einem Bildaufnahmegerät zur Aufnahme eines Wirkmittelbilds der Zielumgebung umfasst, wobei die Vorrichtung dazu ausgebildet ist, ein in einem Aufklärungsbild der Zielumgebung erfasstes Ziel an das Wirkmittelsystem zu übergeben.

Vorrichtungen zur Zielübergabe von Aufklärungssystemen an Wirkmittelsysteme sind aus dem Stand der Technik bekannt, bei denen grundsätzlich ein in einem Aufklärungsbild in seiner Zielumgebung markiertes bzw. erfasstes Ziel an das Wirkmittelsystem übertragen bzw. übergeben werden muss, um ein Wirkmittel des Wirkmittelsystems bei seinem Anflug auf das Ziel steuern zu können. Aus der DE 10 2015 004 939 A1 ist beispielsweise ein Verfahren zum Lenken eines Wirkmittels in Form eines Flugkörpers bekannt, bei welchem anhand eines Referenzbilds eines Ziels, welches von einer bildgebenden Plattform aufgenommen wurde, charakteristische Bildmerkmale ermittelt und dem Flugkörper übergeben werden. Bei seinem Anflug auf das Ziel nimmt der Flugkörper ein Zielbild auf und steuert unter Berücksichtigung der übergebenen charakteristischen Bildmerkmale das Ziel an. Hierfür ist der Flugkörper dazu eingerichtet, anhand seines aktuell aufgenommenen Zielbilds charakteristische Bildmerkmale zu ermitteln und diese mit den übergebenen charakteristischen Bildmerkmalen zu vergleichen und das Ziel bei einem Vergleichsergebnis oberhalb eines Grenzwerts als erkannt zu klassifizieren. Hierbei kann das Problem auftreten, dass die Zielumgebung, in welcher sich das Ziel befindet, durch das Bildaufnahmegerät des Aufklärungssystems von einer anderen Blickrichtung aus bzw. unter einem anderen Blickwinkel betrachtet wird, als dies seitens des Bildaufnahmegerät des Wirkmittels während seines Anflugs möglich ist. Aufgrund der voneinander abweichenden Sichtlinien der jeweiligen Bildaufnahmegeräte ergibt sich eine Abweichung zwischen dem Aufklärungsbild und dem Wirkmittelbild, die bei der Zielübergabe von Aufklärungssystem zu Wirkmittelsystem toleriert werden muss, um das in dem Aufklärungsbild markierte Ziel zuverlässig an das Wirkmittel des Wirkmittelsystems übergeben zu können. Mit anderen Worten wird eine Steuerung des Wirkmittels auf das in dem Aufklärungsbild markierte Ziel nur dann gelingen, wenn das Wirkmittelbild ausreichend nahe an dem Aufklärungsbild liegt, sodass Marker bzw. charakteristische Bildmerkmale, wie beispielsweise Schlüsselpunkte und zugehörige mehrdimensionale Deskriptoren, in dem Aufklärungsbild genutzt werden können, um das Wirkmittel im Anflug steuern zu können. Weicht ein Wirkmittelbild, das während dem Anflug von dem Wirkmittel aufgenommen wird, zu stark von dem Aufklärungsbild ab, ist ein Abgleich der Marker bzw. der charakteristischen Bildmerkmale nicht möglich, sodass eine Steuerung des Wirkmittels in das Ziel nicht zuverlässig gewährleistet bleibt.

Bekannte Verfahren können nur beschränkte Blickwinkelabweichungen, beispielsweise von maximal 15°, zuverlässig tolerieren. Weicht die Blickrichtung bzw. der Blickwinkel des Aufklärungssystems zu stark von der Blickrichtung und dem Blickwinkel des von dem Wirkmittel erfassten Wirkmittelbilds ab - oder anders ausgedrückt, weichen die Sichtlinien der Bildaufnahmegeräte von Aufklärungssystem und Wirkmittel zu stark voneinander ab - kann eine Zielübergabe nicht zuverlässig erfolgen. Eine Zielübergabe in Form von charakteristischen Bildmerkmalen, anhand deren die Zielkoordinaten des Ziels referenziert sind, kann scheitern. Eine Bestimmung einer Lage eines Ziels bzw. eines Punktes auf dem Ziel bzw. eine Bestimmung von dessen Koordinaten im Wirkmittelbild kann scheitern, weil im Rahmen der Zielübergabe übergebene Schlüsselpunkte und zugehhörige Deskriptoren des Aufklärungsbilds nicht in Beziehung mit den Schlüsselpunkten und zugehörigen Deskriptoren des Wirkmittelbilds aufgrund der Sichtlinienabweichung gesetzt werden können. Insbesondere bei Wirkmitteln, deren Sensorik des Bildaufnahmegeräts eine vergleichsweise geringe Auflösung im Vergleich zu einem Bildaufnahmegerät eines Aufklärungssystems besitzen kann, kann die üblicherweise geforderte hohe Robustheit bzw. Stabilität für die Zuordnung des Ziels anhand von übergebenen charakteristischen Bildmerkmalen in der Zielumgebung insbesondere aufgrund der vorhandenen Blickwinkelabweichungen nicht gewährleistet werden. Im schlimmsten Fall ist eine erfolgreiche Zielübergabe nicht möglich, obwohl eine Identifikation des Ziels in dem Aufklärungsbild und in dem Wirkmittelbild für sich gesehen möglich wäre, jedoch eine Referenzierung, also Zuordnung charakteristischer Bildmerkmale und somit eine Übergabe des in dem Aufklärungsbild markierten Ziels in das vom Wirkmittel aufgenommene Wirkmittelbild scheitert.

Der Erfindung liegt die Aufgabe zugrunde, eine demgegenüber verbesserte Vorrichtung zur Zielübergabe von einem Aufklärungssystem an ein Wirkmittelsystem anzugeben.

Die Aufgabe wird durch eine Vorrichtung mit den Merkmalen des Anspruchs 1 gelöst. Vorteilhafte Ausgestaltungen sind Gegenstand der Unteransprüche.

Wie eingangs beschrieben, betrifft die Erfindung eine Vorrichtung zur Zielübergabe von einem Aufklärungssystem, welches ein Bildaufnahmegerät zur Aufnahme eines Aufklärungsbilds einer Zielumgebung umfasst, an ein Wirkmittelsystem. Grundsätzlich kann die Vorrichtung hierbei beliebig ausgestaltet sein, beispielsweise Bestandteil einer Recheneinrichtung bilden, die, insbesondere stationär, eine Übergabe eines in einem Aufklärungsbild des Aufklärungssystems markierten Ziels an das Wirkmittelsystem durchführt. Das Wirkmittelsystem weist wenigstens ein Wirkmittel mit einem Bildaufnahmegerät zur Aufnahme eines Wirkmittelbilds der Zielumgebung auf, insbesondere einen Flugkörper, der für eine Annäherung an das Ziel vorgesehen ist. Das Wirkmittel selbst besitzt üblicherweise eine Lenkeinrichtung, die basierend auf Steuerbefehlen einer Steuereinheit in der Lage ist, die Bewegungsrichtung des Wirkmittels zu beeinflussen, um einen gesteuerten Anflug auf das Ziel zu ermöglichen.

Mit anderen Worten kann, automatisch oder manuell, in einem durch das Bildaufnahmegerät des Aufklärungssystems aufgenommenen Aufklärungsbild, das zumindest eine Zielumgebung zeigt, ein Ziel erfasst werden und markiert werden. Das markierte Ziel muss dem Wirkmittelsystem übergeben bzw. übertragen werden, sodass das Wirkmittel bei seinem Anflug basierend auf dem übergegebenen Ziel, beispielsweise in Form von Zielkoordinaten gesteuert werden kann.

Entsprechend der Erfindung weist die Vorrichtung eine Steuerungseinrichtung auf, die dazu ausgebildet ist, vor Aussenden des Wirkmiltels anhand einer vorberechneten Trajektorie des Wirkmittels ein zu erwartendes Wirkmittelbild von der Zielumgebung zu bestimmen, welches einem durch das Wirkmittelsystem erfassten Wirkmittelbild bei einer tatsächlichen Annäherung an die Zielumgebung bei Aussenden des Wirkmittels entsprechen würde. Weiterhin ist die Steuerungseinrichtung dazu ausgebildet, die anhand des Aufklärungsbilds bestimmten Zielkoordinaten des Ziels in dem Aufklärungsbild basierend auf einer Transformation in das entsprechend bestimmte, zu erwartende Wirkmittelbild zu übertragen. Bei den übertragenen Zielkoordinaten handelt es sich folglich um Pixelpositionen des Ziels in der zu erwartenden Sicht des Wirkmittels bzw. in dem zu erwartenden Wirkmittelbild.

Die Erfindung schlägt somit vor, anstelle einer Referenzierung des Ziels in dem Aufklärungsbild auf das Ziel in dem Wirkmittelbild bei tatsächlicher Annäherung auf die Zielumgebung vorzunehmen, zunächst ein zu erwartendes Wirkmittelbild zu bestimmen, welches die Zielumgebung aus der zu erwartenden Sicht des Wirkmittels zeigt. Das zu erwartende Wirkmittelbild entspricht einem solchen Wirkmittelbild, welches durch das Wirkmittel aufgenommen würde, wenn sich das Wirkmittel an die Zielumgebung und damit dem Ziel annähert. Hierfür wird eine vorberechnete Trajektorie genutzt. Die Vorberechnung der Trajektorie, also die geplante Anflugbahn des Wirkmittels in die Zielumgebung, kann beispielsweise durch die Steuerungseinrichtung in Kenntnis des Abschussortes des Wirkmittels des Wirkmittelsystems und der über das Aufklärungsbild bestimmten Zielkoordinaten des Ziels erfolgen.

Die Steuerungseinrichtung bestimmt somit das zu erwartende Wirkmittelbild von dem Ziel bzw. der Zielumgebung zweckmäßigerweise im Vorfeld des Aussendens des Wirkmittels, anstatt dem Wirkmittel zur Referenzierung das Aufklärungsbild bzw. die Zielkoordinaten des Ziels innerhalb des Aufklärungsbilds, beispielsweise in Bezug auf Marker in dem Aufklärungsbild, zu übergeben. Mit anderen Worten wird das in dem Aufklärungsbild markierte bzw. erfasste Ziel in das zu erwartende Wirkmittelbild übergeben, sodass bei dem tatsächlichen Anflug des Wirkmittels auf die Zielumgebung die Identifikation des Ziels in der Zielumgebung bereits in dem Wirkmittelbild erfasst werden kann. Hierbei ist die Abweichung zwischen dem zu erwartenden Wirkmittelbild und dem tatsächlichen bei der Annäherung an das Ziel oder die Zielumgebung aufgenommenen Wirkmittelbild deutlich kleiner, insbesondere nahezu vollständig eliminiert, als die aufgrund der unterschiedlichen Blickrichtungen bzw. Sichtlinien vorhandenen Unterschiede zwischen dem Aufklärungsbild und dem Wirkmittelbild. Aus dem Aufklärungsbild ermittelte charakteristische Bildmerkmale, anhand derer Koordinaten des erfassten Ziels bestimmbar sind, können basierend auf einer Transformation in das zu erwartende Wirkmittelbild übertragen werden, wodurch die Zielkoordinaten von Aufklärungsbild in zu erwartendes Wirkmittelbild übertragbar sind bzw. übertragen werden.

Dadurch wird gewährleistet, dass Unterschiede in der Position, den Blickrichtungen bzw. Blickwinkeln oder Sichtlinien zwischen Aufklärungssystem und Wirkmittelsystem bei der Zielübergabe berücksichtigt werden können und somit bereits bei der Zielübergabe eliminiert werden können. Die Koordinaten des Ziels in dem Aufklärungsbild können daher in Koordinaten des Ziels in dem zu erwartenden Wirkmittelbild transformiert werden, so dass sich letztlich die Abweichungen zwischen dem Aufklärungssystem und dem Wirkmittelsystem nahezu vollständig eliminieren lassen und Abweichungen in der Blickrichtung bzw. dem Blickwinkel oder der Sichtlinie keine Auswirkungen mehr besitzen. Vor dem Aussenden des Wirkmittels werden diesem anstelle wie bei bekannten Verfahren nicht mehr charakteristische Bildmerkmale und Zielkoordinaten, die aus einem Aufklärungsbild ermittelt wurden, übergeben, sondern es können durch die Steuerungseinrichtung an das Wirkmittel charakteristische Bildmerkmale und Zielkoordinaten übergeben werden, die anhand des zu erwartenden Wirkmittelbilds bestimmt wurden bzw. aufgrund der Transformation des Aufklärungsbilds in das zu erwartende Wirkmittelbild in dieses übertragen wurden. Bei Anflug der Zielumgebung muss das Wirkmittel bzw. eine Steuerungseinheit des Wirkmittels somit allenfalls noch geringfügige Blickwinkelunterschiede aufgrund etwaiger Abweichungen der vorberechneten bzw. geplanten zur tatsächlichen Trajektorie in Bezug auf das im Anflug erfasste Wirkmittelbild der Zielumgebung berücksichtigen. Solche kleinen Blickwinkelunterschiede zwischen zu erwartendem Wirkmittelbild und tatsächlichem Wirkmittelbild bei Anflug sind unkritisch, da ein Einsatz schneller echtzeitfähiger Verfahren durch eine Steuerungseinrichtung des Wirkmittels zur Berechnung charakteristischer Bildmerkmale aus dem tatsächlichen Wirkmittelbild und ein Vergleich mit den übergebenen charakteristischen Bildmerkmalen aus dem zu erwartenden Wirkmittelbild möglich ist.

Wie im Nachfolgenden noch detaillierter beschrieben wird, kann durch die Bestimmung des zu erwartenden Wirkmittelbilds und die Zielübergabe aus dem Aufklärungsbild in das zu erwartende Wirkmittelbild das Ziel auch dann an das Wirkmittelsystem übergeben werden, wenn das Aufklärungsbild und das Wirkmittelbild deutlich voneinander abweichen, d.h. die Sichtlinien der jeweiligen Bildaufnahmegeräte stark voneinander abweichen, z.B. mehr als 15° oder insbesondere mehr als 90°. Dies ist beispielsweise der Fall, wenn das Ziel in dem Aufklärungsbild von einer anderen Seite oder aus einer anderen, beispielsweise der gegenüberliegenden, Richtung im Vergleich zum Wirkmittelbild aufgenommen wird und somit diese Seite des Ziels in dem Wirkmittelbild nicht sichtbar ist.

Die Vorrichtung gemäß der Erfindung erlaubt insbesondere die Verwendung einer größeren Vielfalt an Aufklärungssystemen bzw. das Nutzen verschiedenster Aufklärungsbilder, die beispielsweise nicht auf Luftaufnahmen beschränkt sind. Da die Beschränkung auf Aufklärungsbilder, die näherungsweise dem Wirkmittelbild in Bezug auf seinen Blickwinkel entsprechen, aufgehoben ist, können, je nach vorhandenen Daten der Zielumgebung nahezu beliebige Aufklärungsbilder für die Zielerfassung und die Zielmarkierung verwendet werden. Da das erfasste bzw. markierte Ziel anschließend in ein zu erwartendes Wirkmittelbild übertragen wird, ist die ursprüngliche Abweichung zwischen Aufklärungssystem und Wirkmittelsystem bzw. der Sichtlinien der jeweiligen Bildaufnahmegeräte für die Zielübergabe nicht mehr relevant.

Die beschriebene Vorrichtung kann insbesondere "offline" arbeiten, d.h., dass die Zielübergabe an das Wirkmittelsystem, insbesondere an das Wirkmittel selbst, vor Abschuss bzw. vor Starten des Wirkmittels stattfinden kann. Die Vorrichtung, oder genauer gesagt die Steuerungseinrichtung der Vorrichtung,kann hierzu von dem Aufklärungssystem das Aufklärungsbild oder die Daten des Ziels erhalten, insbesondere in Form von Zielkoordinaten in dem Aufklärungsbild. Basierend auf den Einzelheiten des Wirkmittelsystems, insbesondere die Trajektorie des Wirkmittels betreffend, kann für die entsprechende Zielumgebung das zu erwartende Wirkmittelbild bestimmt werden. Hierbei ist eine Referenzierung des Ziels in dem zu erwartenden Wirkmittelbild basierend auf den Zielkoordinaten aus dem Aufklärungsbild möglich, so dass dem Wirkmittel vor seinem Start bzw. Aussenden letztlich die Zielkoordinaten in dem zu erwartenden Wirkmittelbild übergeben werden können, welches zu erwartende Wirkmittelbild bei Annäherung an die Zielumgebung dem erfassten Wirkmittelbild entspricht bzw. in guter Näherung entsprechen soll. Abweichungen zwischen dem zu erwartenden Wirkmittelbild und dem letztlich erfassten Wirkmittelbild sind in diesem Fall auf Abweichungen von der vorberechneten Trajektorie bzw. Veränderungen der Zielumgebung nach Zielübergabe beschränkt. Gemäß einem Ausführungsbeispiel der Erfindung wird durch die Steuerungseinrichtung auf Grundlage des im Aufklärungsbild markierten Ziels die Trajektorie eines Wirkmittels des Wirkmittelsystem bei einem Anflug auf dieses Ziel vorberechnet und basierend darauf das zu erwartende Wirkmittelbild mit der Position des Ziels berechnet. Weiterhin werden durch die Steuerungseinrichtung charakteristische Bildmerkmale in dem zu erwartenden Wirkmittelbild berechnet, so dass die Position des Ziels in Bezug auf diese charakteristischen Bildmerkmale referenziert ist. Diese charakteristischen Bildmerkmale und die Position des Ziels werden dann durch die Steuerungseinrichtung an das Wirkmittelsystem bzw. an das Wirkmittel, beispielsweise vor dessen Verschuss oder nach einem Verschuss über einen Datenlink, übergeben. Hierdurch kann eine Steuerungseinheit des Wirkmittels anhand eines vom Bildaufnahmegerät des Wirkmittels gemachten Wirkmittelbilds der Zielumgebung charakteristische Bildmerkmale berechnen und diese mit den übergebenen Bildmerkmalen abgleichen, wodurch die Steuerungseinheit auch die Zielposition in der aktuellen Sicht des Wirkmittels berechnen kann.

Die Vorrichtung kann ferner dazu ausgebildet sein, die Zielkoordinaten basierend auf einer affinen Transformation, einer Homographie oder einer modellbasierten Transformation aus einem Aufklärungsbild aus dem Aufklärungssystem in das zu erwartende Wirkmittelbild des Wirkmittelsystems, zu übergeben bzw. zu übertragen. Wie bereits beschrieben, können für die Zielübergabe Informationen des Aufklärungssystems und des Wirkmittelsystems ausgenutzt werden, insbesondere unter welchen Bedingungen das Aufklärungsbild aufgenommen wurde und unter welchen Bedingungen das tatsächliche Wirkmittelbild bei Anflug aufgenommen werden wird. Die Bedingungen für die Bilder können beispielsweise die Sichtlinie, die Position und die Entfernung zum Ziel betreffen, insbesondere einen Blickwinkel und/oder einen Bildausschnitt eines Zielgebiets bzw. der Zielumgebung.

In einem einfachsten Fall kann eine affine Transformation oder eine Homographie dazu verwendet werden, in Kenntnis der jeweiligen Sichtlinien, also der Sichtlinie des Aufklärungssystems und der Sichtlinie des Wirkmittelsystems, für das Aufklärungsbild und das zu erwartende Wirkmittelbild, die Zielkoordinaten des Ziels aus dem Aufklärungsbild in Zielkoordinaten des zu erwartenden Wirkmittelbilds zu transformieren. Anschließend kann dem Wirkmittel das Ziel in an sich bekannter Weise, insbesondere anhand von Zielkoordinaten in Form von charakteristischen Bildmerkmalen und entsprechend referenzierten Zielkoordinaten in Bezug auf diese charakteristischen Bildmerkmale, für das zu erwartende Wirkmittelbild übergeben werden. Nähert sich das Wirkmittel dem Ziel an, wird das bei einem Zielanflug von dem Wirkmittel aufgenommene Wirkmittelbild abgesehen von kleineren Abweichungen dem zuvor bestimmten, zu erwartenden Wirkmittelbild entsprechen, sodass die Zielkoordinaten für das zu erwartende Wirkmittelbild in dem erfassten Wirkmittelbild verwendet werden können, um das Wirkmittel zu steuern und gegebenenfalls Korrekturen an der Flugbahn vorzunehmen.

Weichen die Sichtlinien des Aufklärungssystems und des Wirkmittelsystems bzw. die Sichtlinien der Bildaufnahmegeräte von Aufklärungssystem und Wirkmittel zu stark voneinander ab, beispielsweise um mehr als 15°, kann es vorkommen, dass das Aufklärungsbild des Aufklärungssystems nicht direkt auf die zu erwartende Sicht des Wirkmittels bzw. in das zu erwartende Wirkmittelbild umgerechnet werden kann. Solche Fälle können insbesondere dann auftreten, wenn die Zielumgebung bzw. das Zielgebiet einen deutlichen dreidimensionalen Charakter aufweist (beispielsweise Gebirge). In solchen Fällen kann eine modellbasierte Transformation verwendet werden: Liegen beispielsweise für die Zielumgebung weitergehende Daten vor, die beispielsweise eine dreidimensionale Struktur der Zielumgebung beschreiben (3D-Modell), kann die Übertragung des Ziels aus dem Aufklärungsbild in das zu erwartende Wirkmittelbild auch dann erfolgen, wenn eine Sichtlinienabweichung von mehr als 15° gegeben ist. Sind aus einem Aufklärungsbild ermittelte charakteristische Bildmerkmale nicht in einem zu erwartenden Wirkmittelbild ermittelbar und damit eine entsprechende Übertragung der Zielkoordinaten nicht möglich, so kann in diesem Fall zum Beispiel eine Übertragung der charakteristischen Bildmerkmale und der Zielkoordinaten aus dem Aufklärungsbild in das Modell erfolgen und aus dem Modell wiederum können charakteristische Bildmerkmale, die in dem zu erwartenden Wirkmittelbild ermittelbar sind und entsprechend zu diesen Bildmerkmalen referenzierte Zielkoordinaten in das zu erwartende Wirkmittelbild übertragen werden. Oder anders gesagt: Indem in einem ersten Schritt durch die Steuerungseinrichtung das Aufklärungsbild mit der Zielposition gegen beispielsweise ein 3D-Modell registriert wird, wodurch die 3D-Position des Ziels in Bezug auf das 3D-Modell bekannt wird, und in einem zweiten Schritt aus dem 3D-Modell das zu erwartende Wirkmittelbild des Wirkmittels mit der Zielposition gerendert wird, können aus dem derart bestimmten zu erwartenden Wirkmittelbild charakteristische Bildmerkmale berechnet werden und das Ziel in Bezug auf die Bildmerkmale referenziert werden für die Übergabe an das Wirkmittelsystem.

Wie beschrieben, kann die Transformation basierend auf einer bekannten Position und/oder Sichtlinie des Aufklärungssystems und einer bestimmten Position und/oder Sichtlinie des Wirkmittelsystems bestimmt werden. In Kenntnis der jeweiligen Positionen und/oder Sichtlinien kann die Transformation aus dem Aufklärungsbild in das zu erwartende Wirkmittelbild vorgenommen werden. Die Umstände der Bildaufnahme beschreibende Daten, unter welchen Umständen das Aufklärungsbild entstanden sind, können beispielsweise bei Aufnahme des Aufklärungsbilds mit abgespeichert und zusammen mit den Zielkoordinaten bzw. zusammen mit dem Aufklärungsbild an die Vorrichtung bzw. deren Steuerungseinrichtung übertragen werden. Wird das Aufklärungsbild beispielsweise mit einem Flugkörper, zum Beispiel einer Drohne, aufgenommen, kann unter anderem die Ausrichtung des Flugkörpers sowie der Blickwinkel des Flugkörpers und seine Zielentfernung an die Steuerungseinrichtung übergeben werden und bei der Bestimmung des zu erwartenden Wirkmittelbilds berücksichtigt werden. Diese die Umstände der Bildaufnahme beschreibenden Daten können bei der Vorberechnung der Trajektorie des Wirkmittels durch die Steuerungseinrichtung berücksichtigt werden und können damit Eingang in die Bestimmung des zu erwartenden Wirkmittelbilds finden.

Eine weitere Möglichkeit besteht darin, eine Vergrößerung bzw. einen Zoomfaktor bzw. eine Skalierung an die Steuerungseinrichtung der Vorrichtung mit zu übergeben. Wie bereits beschrieben, ist bei der Steuerung des Wirkmittelsystems grundsätzlich auch die Trajektorie des Wirkmittels bekannt bzw. wird diese für den Einsatz des Wirkmittels bestimmt. Aus der bekannten Trajektorie kann bestimmt werden, in welcher Position und mit welcher Sichtlinie das Wirkmittel die Zielumgebung erfassen wird. Basierend darauf kann das zu erwartende Wirkmittelbild bestimmt werden und, wie zuvor beschrieben, die Transformation aus dem Aufklärungsbild in das zu erwartende Wirkmittelbild vorgenommen werden.

Wie zuvor beschrieben, kann die Transformation neben einer affinen Transformation oder einer Homographie auch eine modellbasierte Transformation vorsehen. Die modellbasierte Transformation kann beispielsweise basierend auf einem Geländemodell und/oder einem Höhenmodell bestimmt werden bzw. ein solches Modell umfassen. Die modellbasierte Transformation erlaubt insbesondere, die Zielkoordinaten aus dem Aufklärungsbild in das Modell zu übernehmen und so das Ziel in dem Modell zu markieren. Da das Aufklärungsbild innerhalb des Modells registriert wird, und das Wirkmittelbild seinerseits aus dem Modell durch Rendering erzeugt werden kann,, kann so das Ziel aus dem Modell in das zu erwartende Wirkmittelbild übertragen werden und dem Wirkmittel mitgegeben werden. Als Modell ist beispielsweise ein 2,5D-Modell, insbesondere Bilddaten und Höhendaten, oder ein 3D-Modell, insbesondere ein dreidimensionales Facettenmodell, möglich.

Das Modell kann beispielsweise durch sämtliche aufgenommenen Informationen ergänzt werden, beispielsweise Bilddaten durch Überflüge, Satellitenbilder, geographische Daten, Höhendaten und dergleichen, sodass ein Aufklärungsbild, das bodennah durch einen Menschen, insbesondere mit einem Smartphone, aufgenommen wurde, in das Modell übertragen werden kann. Eine Zielmarkierung innerhalb eines solchen bodennah aufgenommenen Aufklärungsbilds kann in das Modell übernommen werden und dem Wirkmittel in Form von Zielkoordinaten in dem zu erwartenden Wirkmittelbild übergeben werden. Wie beschrieben, ermöglicht dies eine Zielübergabe auch bei quasi vollständiger Ungleichheit zwischen Aufklärungsbild und Wirkmittelbild, beispielsweise bei Anflug des Wirkmittels von einer Seite der Zielumgebung, die der Seite der Zielumgebung gegenüberliegt, von der aus das Aufklärungsbild aufgenommen wurde.

Die beschriebene Vorrichtung kann dahingehend weitergebildet werden, dass die Steuerungseinrichtung dazu ausgebildet ist, eine Transformation zu bestimmen, die eine Registrierung eines, insbesondere zweidimensionalen, Aufklärungsbilds in einem Geländemodell, insbesondere einem dreidimensionalen Facettenmodell, und eine Übertragung einer in dem Aufklärungsbild markierten Koordinate in ein Wirkmittelbild in dem Geländemodell umfasst, wenn die Sichtlinien der Bildaufnahmegeräte von Aufklärungssystem und Wirkmittel bei aufgenommenem Aufklärungsbild und zu erwartendem Wirkmittelbild mehr als 15° voneinander abweichen. Wie bereits zuvor beschrieben, kann das Aufklärungsbild in dem Modell registriert werden, sodass letztlich das Ziel bzw. die Zielumgebung mittels des Modells aus dem Aufklärungsbild in das zu erwartende Wirkmittelbild übertragen werden kann. Aufgrund der vorberechneten Trajektorie ist bekannt, wie die Sicht des Wirkmittels bei einem Anflug auf das Ziel bzw. die Zielumgebung sein würde, so dass mittels des Modells durch Rendering das zu erwartende Wirkmittelbild berechnet werden kann. Die Vorrichtung bzw. die Steuerungseinrichtung ist dazu ausgebildet, das Aufklärungsbild und das bestimmte zu erwartende Wirkmittelbild innerhalb des Modells zu registrieren, sodass ein Zusammenhang zwischen dem Aufklärungsbild und dem Wirkmittelbild mittels des Modells herstellbar ist. Die Zielkoordinate des Ziels in dem Aufklärungsbild wird somit entnommen und auf das Koordinatensystem des Modells übertragen.

Das Ziel kann beispielsweise in einem Aufklärungsbild markiert werden, das eine Zielumgebung zeigt, die aus der Sicht des Wirkmittels nicht einsehbar ist. Mit anderen Worten kann eine Zielübergabe stattfinden, ohne direkte Sicht des Wirkmittels auf das Ziel. Stattdessen werden die Zielkoordinaten aus dem Aufklärungsbild in das Modell übertragen, wobei durch die Referenzierung zwischen Aufklärungsbild, Modell und Wirkmittelbild die Zielkoordinaten in dem zu erwartenden Wirkmittelbild bestimmt werden können und dem Wirkmittel mitgegeben werden können.

Nach einer weiteren Ausgestaltung der Vorrichtung kann vorgesehen sein, dass ein Modell, insbesondere ein Geländemodell, basierend auf wenigstens einem Beschaffenheitsparameter einer Zielumgebung bestimmt wird, insbesondere basierend auf Gebietsinformationen und/oder Höhendaten und/oder GPS-Daten und/oder Vermessungsdaten, insbesondere einer Lidar-Messung oder Satellitendaten oder historischen Daten. Eine Ausgestaltung der Vorrichtung sieht vor, dass je nach Beschaffenheit der Zielumgebung durch die Steuerungseinrichtung eine Transformation bestimmt bzw. ausgewählt werden kann, welche für die Zielübergabe vorteilhaft oder erforderlich ist. Ist die Zielumgebung beispielsweise vergleichsweise flach, sodass eine Zielübergabe aus dem Aufklärungsbild in das zu erwartende Wirkmittelbild durch eine affine Transformation oder eine Homographie möglich ist, kann eine solche Transformation ausgewählt werden. Gibt der Beschaffenheitsparameter der Zielumgebung an, dass Strukturen in der Zielumgebung eine solche einfache Transformation nicht zulassen, beispielsweise im Gebirge bzw. einer urbanen Umgebung, kann stattdessen eine modellbasierte Transformation, welche beispielsweise ein Geländemodell berücksichtigt, bestimmt werden, welche für die Zielübergabe erforderlich ist. Die entsprechenden Daten können beliebig erhoben werden, zum Beispiel durch Bilddaten, die während Aufklärungsflügen erfasst wurden.

Eine weitere Möglichkeit besteht darin, dass die Vorrichtung bzw. die Steuerungseinrichtung dazu ausgebildet ist, wenigstens einen Parameter des Aufklärungssystems und des Wirkmittelsystems anzugleichen, insbesondere die Sensorik, einen Öffnungswinkel und/oder eine Skalierung und/oder einen Spektralbereich. Nach dieser Ausgestaltung kann insbesondere vorgesehen sein, dass nach Möglichkeit eine Übergabe des Ziels in gleiche Spektralbereiche erfolgt. Das bedeutet, dass nach Möglichkeit die Zielübergabe aus dem Aufklärungsbild in dem gleichen Spektralbereich erfolgt, wie der Spektralbereich des Wirkmittelbilds. Ferner können Skalierungen oder Unterschiede in der Skalierung bei Zielübergabe berücksichtigt werden, d.h., mit welcher Vergrößerung das Aufklärungsbild aufgenommen wurde bzw. welche Größe das Ziel oder Marker und die Zielumgebung in dem Aufklärungsbild besitzt und mit welcher Vergrößerung das tatsächliche Wirkmittelbild aufgenommen wird bzw. welche Größe das Ziel oder Marker und die Zielumgebung in dem tatsächlichen Wirkmittelbild besitzen wird.

Die Steuerungseinrichtung der Vorrichtung kann ferner dazu ausgebildet sein, einen die Qualität der Zielübergabe beschreibenden Zuverlässigkeitsparameter zu bestimmen. Der Zuverlässigkeitsparameter kann eine Aussage darüber treffen, inwieweit die Zielübergabe belastbar durchgeführt wurde. Der Zuverlässigkeitsparameter betrifft letztlich ein Vertrauensmaß, das die Güte des Matchings beschreibt. Zum Beispiel kann, je nach Zielumgebung, eine Bestimmung der Zielkoordinaten und ein Wiedererkennen des Ziels in der Zielumgebung weniger belastbar sein, zum Beispiel wenn die Zielumgebung kontrastarm oder aus sich wiederholenden Bildinformationen, zum Beispiel eine Reihe gleichartiger Gebäude, ein weißes Ziel auf einem weißen Untergrund, Vegetation und dergleichen, besteht. Hierbei ist es möglich, die Zielübergabe basierend auf dem Zuverlässigkeitsparameter zu bewerten, so dass sichergestellt werden kann, dass die Zielübergabe und somit die Steuerung des Wirkmittels zuverlässig und robust ausgeführt wurde. Der Zuverlässigkeitsparameter kann sich auch aus Einzelparametern getrennt für das Aufklärungssystem und das Wirkmittelsystem zusammensetzen.

Neben der Vorrichtung betrifft die Erfindung ein System, umfassend ein Wirkmittelsystem und eine zuvor beschriebene Vorrichtung. Wie beschrieben, kann das Wirkmittel bei seinem Anflug auf das Ziel Korrekturen seiner Flugbahn vornehmen. Hierzu kann, insbesondere im Wege einer Proportionalregelung, eine Steuerung der entsprechenden Lenkeinrichtung des Wirkmittels vorgenommen werden. Da die Zielübergabe basierend auf dem zu erwartenden Wirkmittelbild erfolgt, ist davon auszugehen, dass das Wirkmittelbild, das seitens des Wirkmittels erfasst wird, wenn sich das Wirkmittel der Zielumgebung nähert, im Wesentlichen dem zu erwartenden Wirkmittelbild entspricht. Daher können die Korrekturen der aktuellen Flugbahn vorgenommen werden, um Abweichungen der aktuellen Flugbahn von der geplanten Flugbahn basierend auf einer Abweichung der Zielkoordinaten zu korrigieren. Die Abweichungen der Zielkoordinaten zwischen aktuellem Wirkmittelbild und zu erwartendem Wirkmittelbild werden in der entsprechenden Regelung zu null geregelt, sodass das Wirkmittel das Ziel in der Zielumgebung, wie bestimmt, erreichen kann.

Ferner betrifft die Erfindung ein Verfahren zur Zielübergabe von einem Aufklärungssystem, welches ein Bildaufnahmegerät zur Aufnahme eines Aufklärungsbilds einer Zielumgebung ausbildet ist, an ein Wirkmittelsystem, welches ein Wirkmittel, insbesondere einen Flugkörper, mit einem Bildaufnahmegerät zur Aufnahme eines Wirkmittelbilds der Zielumgebung umfasst, wobei ein in einem Aufklärungsbild der Zielumgebung erfasstes Ziel an das Wirkmittelsystem übergeben wird, wobei vor Aussenden des Wirkmittels anhand einer vorberechneten Trajektorie des Wirkmittels ein zu erwartendes Wirkmittelbild von der Zielumgebung bestimmt wird, welches einem durch das Wirkmittelsystem erfassten Wirkmittelbild bei einer tatsächlichen Annäherung an die Zielumgebung entsprechen würde und wobei die anhand des Aufklärungsbilds bestimmten Zielkoordinaten des Ziels in dem Aufklärungsbild basierend auf einer Transformation in das entsprechend bestimmte, zu erwartende Wirkmittelbild übertragen wird.

Sämtliche Vorteile, Einzelheiten und Merkmale, die zuvor in Bezug auf die Vorrichtung beschrieben wurden, sind vollständig auf das System und das Verfahren übertragbar.

Die Erfindung wird nachfolgend anhand von Ausführungsbeispielen unter Bezugnahme auf die Fig. erläutert. Die Fig. sind schematische Darstellungen und zeigen:
- Fig. 1: eine Prinzipdarstellung einer Zielübergabe von einem Aufklärungssystem zu einem Wirkmittelsystem nach einem ersten Ausführungsbeispiel in perspektivischer Darstellung;
- Fig. 2a, 2b: je ein schematisches Aufklärungsbild;
- Fig. 3a, 3b: je ein schematisches Wirkmittelbild;
- Fig. 4a: eine Prinzipdarstellung einer Zielübergabe nach einem zweiten Ausführungsbeispiel in Aufsicht;
- Fig. 4b: die Prinzipdarstellung von Fig. 4a in seitlicher Darstellung.

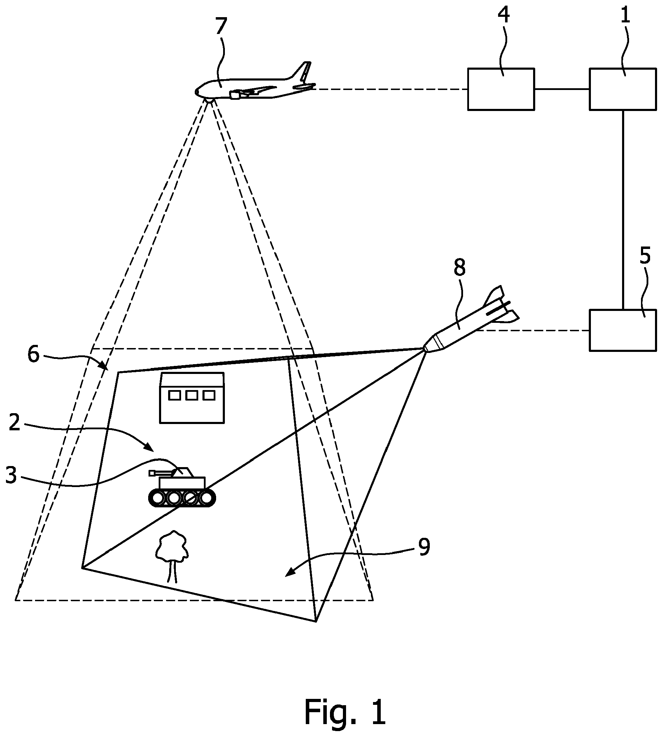

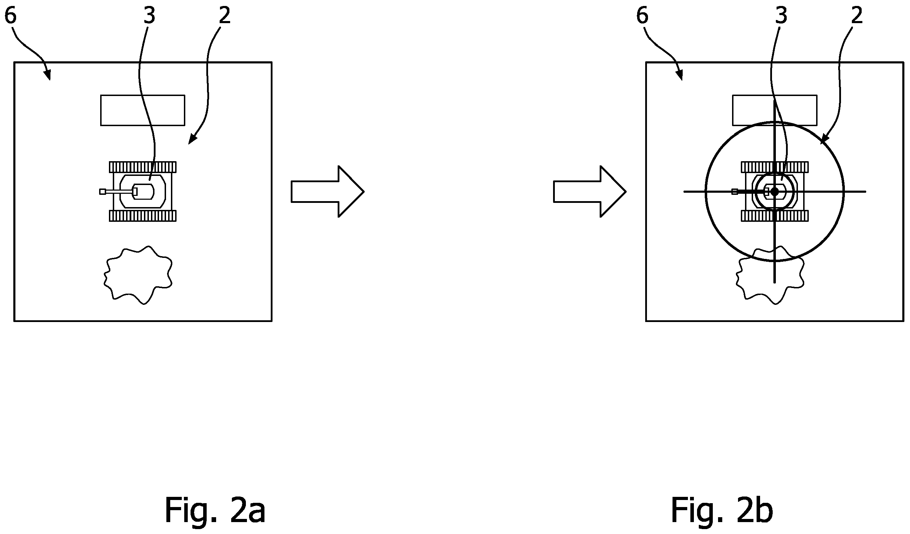

Fig. 1 zeigt eine Vorrichtung 1 zur Zielübergabe eines in einer Zielumgebung 2 erfassten Ziels 3 zwischen einem Aufklärungssystem 4 und einem Wirkmittelsystem 5. Das Aufklärungssystem 4 ist in diesem Ausführungsbeispiel zur Aufnahme bzw. zur Erzeugung eines Aufklärungsbilds 6 mittels eines Bildaufnahmegeräts ausgebildet, das in Fig. 2a, 2b dargestellt ist. Lediglich beispielhaft wird das Aufklärungsbild 6 mittels eines Fluggeräts 7, beispielsweise einer Drohne oder eines Flugzeugs, aufgenommen. Die Art und Weise wie das Aufklärungsbild 5 aufgenommen wird, ist völlig beliebig. Die Beschreibung ist entsprechend übertragbar.

Das Wirkmittelsystem 5 umfasst zumindest ein Wirkmittel 8, beispielsweise einen Flugkörper, insbesondere einen Lenkflugkörper oder eine Rakete. Das Wirkmittel 8 umfasst ebenfalls ein Bildaufnahmegerät, welches beispielsweise ein Bolometer umfassen kann, und ist somit dazu ausgebildet, ein Wirkmittelbild 9 der Zielumgebung 2 aufzunehmen bzw. zu erfassen. Das aufgenommene Aufklärungsbild 6, das in Fig. 2a dargestellt ist, bildet letztlich die Basis dafür, das Ziel 3 zu erfassen bzw. dieses in der Zielumgebung 2 zu markieren. Fig. 2b zeigt das markierte Ziel 3 in der Zielumgebung 2. Das Ziel 3 kann beispielsweise anhand von Zielkoordinaten in der Zielumgebung 2 bestimmt werden, sodass dessen Position zur Zielübergabe übergeben werden kann. Das Markieren des Ziels 3 bzw. das Erfassen des Ziels 3 in der Zielumgebung 2 kann manuell durch einen Bediener oder automatisiert vorgenommen werden.

Anschließend kann die Vorrichtung 1 bzw. deren Steuerungseinrichtung die Zielübergabe von dem Aufklärungssystem 4 an das Wirkmittelsystem 5 bzw. an dessen Wirkmittel 8 vornehmen. Dazu wird ein zu erwartendes Wirkmittelbild 10 bestimmt. Das zu erwartende Wirkmittelbild 10 entspricht dem Wirkmittelbild 9, welches das Wirkmittels 8 bei seiner tatsächlichen Annäherung an die Zielumgebung 2 erfassen werden wird, wie dies in Fig. 1 schematisch dargestellt ist. Mit anderen Worten wird bereits vor Aussenden des Wirkmittels 8 dessen Trajektorie für die Annäherung an das Ziel 3 bzw. die Zielumgebung 2 seitens der Steuerungseinrichtung bestimmt, sodass die Position und die Sichtlinie des Wirkmittels 8 auf das Ziel 3 bereits bekannt ist. Die Berechnung der Trajektorie des Wirkmittels 8 kann beispielsweise basierend auf der durch das Aufklärungssystem 4 bestimmten Koordinaten des Ziels 3 oder zumindest der Zielumgebung 2 erfolgen. Die Berechnung der Trajektorie des Wirkmittels 8 kann durch die Steuerungseinrichtung der Vorrichtung vorgenommen werden.

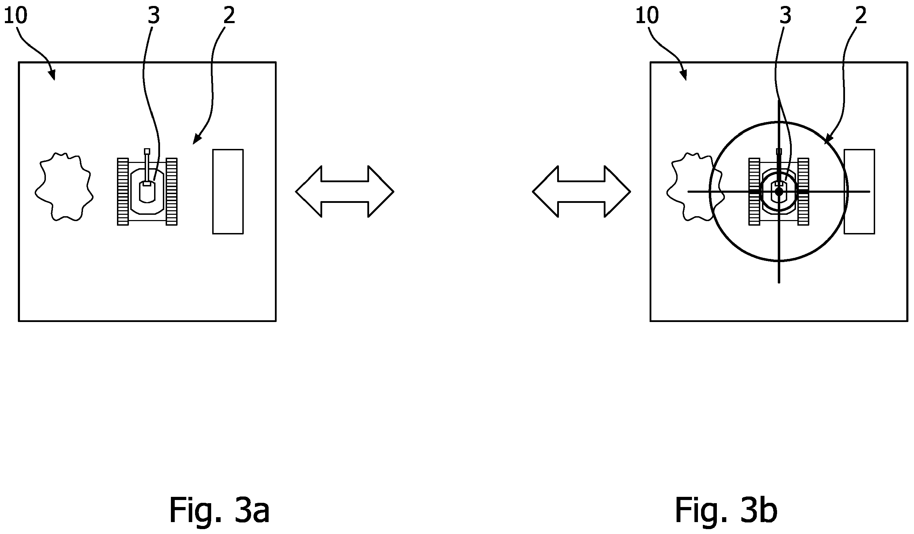

In Kenntnis der Daten aus dem Aufklärungssystem 4, insbesondere der Zielkoordinaten des Ziels 3 in der Zielumgebung 2, wie diese in dem Aufklärungsbild 6 aufgenommen wurden, und basierend auf dem zu erwartenden Wirkmittelbild 10, insbesondere der zu erwartenden Position und/oder Sichtlinie des Wirkmittels 8 auf die Zielumgebung 2, kann die Vorrichtung 1 oder genauer gesagt deren Steuerungseinrichtung die Transformation der Zielkoordinaten vornehmen. Mit anderen Worten werden aus der in Fig. 2b dargestellten Markierung des Ziels 3 und der Zielumgebung 2 in dem Aufklärungsbild 6 die Zielkoordinaten in das zu erwartende Wirkmittelbild 10 übertragen, wie dies in Fig. 3a, 3b dargestellt ist.

In einem einfachen Fall, in dem die Zielumgebung 2 vergleichsweise flach ist, kann die Transformation, die von der Steuerungseinrichtung der Vorrichtung 1 vorgenommen wird, eine affine Transformation oder eine Homographie sein. Erfordert das Gelände, beispielsweise aufgrund stark unterschiedlicher Höhenstrukturen, wie dies in einem Gebirge oder in einem urbanen Gebiet vorliegt, mehr Informationen, kann die Transformation basierend auf einem Modell vorgenommen werden. Als Modell bieten sich beispielsweise Höhendaten und Bilder der Zielumgebung 2 an. Ebenso ist es möglich, ein dreidimensionales Modell, beispielsweise ein dreidimensionales Facettenmodell der Zielumgebung 2 zu erstellen.

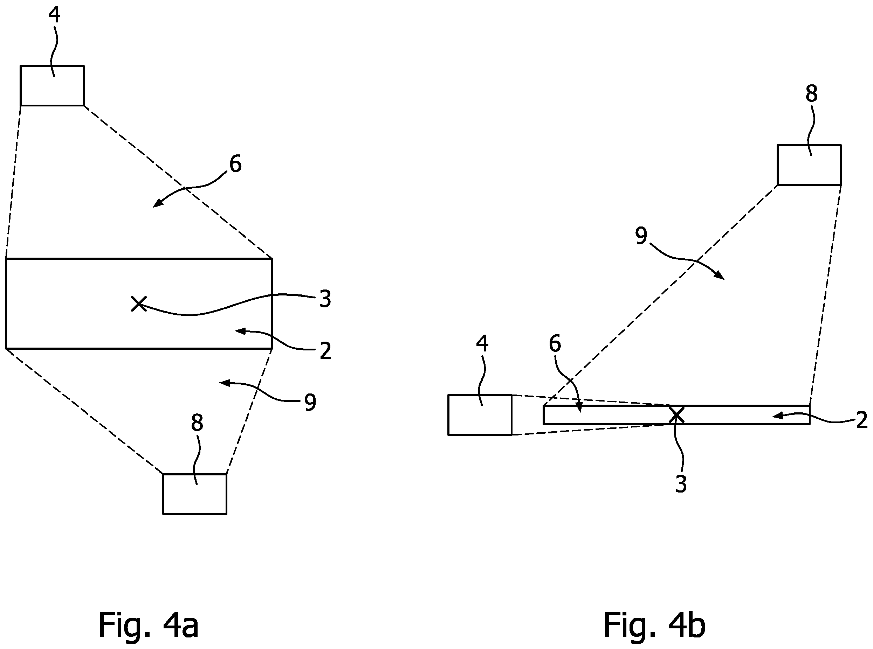

In diesem Fall ist eine Überschneidung bzw. Ähnlichkeit der Sichtlinien zwischen Aufklärungssystem 4 und zu erwartendem Wirkmittelbild 10 nicht mehr erforderlich. Grundsätzlich kann die Vorrichtung 1 über das Modell eine Referenzierung zwischen Aufklärungsbild 6 und zu erwartendem Wirkmittelbild 10 vornehmen, sodass der Blick auf die Zielumgebung 2 zwischen dem Aufklärungsbild 6 und dem zu erwartenden Wirkmittelbild 10 quasi völlig unterschiedlich sein kann, d.h. die Sichtlinien der Bildaufnahmegeräte von Aufklärungssystem 4 und Wirkmittel 8 mehr als 15° voneinander abweichen können. Ein derartiger Fall ist schematisch in Fig. 4a, Fig. 4b dargestellt.

Fig. 4 zeigt beispielhaft ein Aufklärungssystem 4, welches ein Aufklärungsbild 6 von einer Zielumgebung 2 aufnimmt, in der ein Ziel 3 angeordnet ist, wie bereits zuvor beschrieben. Das Wirkmittel 8, das ebenfalls schematisch dargestellt ist, wird in diesem Fall durch seine Trajektorie bedingt näherungsweise von der gegenüberliegenden Seite auf die Zielumgebung 2 geführt, je nach Einfallswinkel (auch "angle of fall" genannt) sind die Sichtlinien des Aufklärungssystems 4 und des Wirkmittels 8 in diesem Fall völlig unterschiedlich. Ebenso ist möglich, dass das Aufklärungssystem 4 ein Aufklärungsbild 6 bodennah, aufnimmt, bei dem Aufklärungssystem 4 kann es sich dabei beispielsweise um ein Smartphone, handeln. Das Wirkmittelbild 9, das von dem Wirkmittel 8 aufgenommen wird, das sich beispielsweise unter einem Winkel größer 45° gegenüber der Erdoberfläche von der gegenüberliegenden Seite der Zielumgebung 2 und somit dem Ziel 3 nähert, weist somit, insbesondere in einem urbanen Gebiet, keine Gemeinsamkeiten mit dem Aufklärungsbild 6 auf. Eine Referenzierung über Marker bzw. Vergleich charakteristischer Bildmerkmale in dem Aufklärungsbild 6 und dem Wirkmittelbild 9 ist somit nicht möglich bzw. das Wirkmittel 8 kann nicht basierend auf Zielkoordinaten des Aufklärungsbilds 6 gesteuert werden.

In diesem Fall kann die Vorrichtung 1 ein Modell, insbesondere ein dreidimensionales Facettenmodell, der Zielumgebung 2 verwenden. Hierin wird das Aufklärungsbild 6 innerhalb des Modells registriert und somit die Zielkoordinaten des Ziels 3 innerhalb des Modells bestimmt. Basierend auf der Position und der Sichtlinie des Wirkmittels 8, die durch die Trajektorie des Wirkmittels 8 für das Erreichen der Zielumgebung 2 bestimmt werden, wird, wie zuvor beschrieben, das zu erwartende Wirkmittelbild 10 mittels Rendering bestimmt. Damit liegen auch die zuvor bestimmten Zielkoordinaten für das Ziel 3 entsprechend als Zielkoordinaten in dem zu erwartendem Wirkmittelbild vor und können dem Wirkmittel 8 übermittelt werden, zusammen mit der auf dem zu erwartendem Wirkmittelbild extrahierten Umgebungsinformation in Form charakteristischer Bildmerkmale, wie beispielsweise Schlüsselpunkte und zugehörige mehrdimensionale Deskriptoren.

Vorteilhafterweise ist es somit möglich, eine Steuerung des Wirkmittels 8 basierend auf Zielkoordinaten des Ziels 3 innerhalb des zu erwartenden Wirkmittelbilds 10 zu gewährleisten. Insbesondere kann das Wirkmittel 8, das während dem Anflug auf die Zielumgebung 2 bzw. das Ziel 3 das Wirkmittelbild 9 aufnimmt, dieses mit den Zielkoordinaten des Ziels 3 in dem zu erwartenden Wirkmittelbild 10 abgleichen. Da die Trajektorie zuvor bestimmt wurde, ist eine hohe Ähnlichkeit zwischen dem zu erwartenden Wirkmittelbild 10 und dem tatsächlich erfassten Wirkmittelbild 9 zu erwarten, sodass die Zielübergabe in diesem Fall deutlich vereinfacht und robust gegen Fehler ist.

Die beschriebene Zielübergabe überträgt die Zielkoordinaten nicht aus dem Aufklärungsbild 6 in das Wirkmittelbild 9, sondern bestimmt zuvor ein zu erwartendes Wirkmittelbild 10, sodass die Übergabe der Zielkoordinaten direkt in das System des Wirkmittels 8 erfolgen kann. Dies erfordert, wie beschrieben, keine direkte Sichtlinie des Wirkmittels 8 auf das Ziel 3 in dem Aufklärungsbild 6. Insbesondere, wenn die Zielübergabe modellbasiert erfolgt, kann auf eine direkte gemeinsame oder ähnliche Sichtlinie verzichtet werden.

Die Steuerungseinrichtung der Vorrichtung 1 nutzt somit nicht das Aufklärungsbild 6 für die Berechnung von charakteristischen Bildmerkmalen, beispielsweise in Form von Schlüsselpunkten und zugehörigen mehrdimensionale Deskriptoren, sondern transformiert diese zunächst auf das "System" des Wirkmittels 8, insbesondere auf Zielkoordinaten in dem zu erwartenden Wirkmittelbild 10. Basierend auf den zur Verfügung stehenden Informationen, insbesondere Position, Sichtlinie und Zielentfernung in dem Aufklärungsbild 6 sowie die erwartete Position, Sichtlinie und Zielentfernung in dem zu erwartenden Wirkmittelbild 10, die aus der Trajektorie bestimmt werden können, ist die Transformation möglich. Letztlich kann das Wirkmittel 8 somit eine Regelung der Flugbahn basierend auf charakteristischen Bildmerkmalen und der Zielposition basierend auf dem zu erwartenden Wirkmittelbild 10 vornehmen, anstelle eines Abgleichs mit einem Aufklärungsbild 6, das nicht der Position und Sichtlinie des Wirkmittels 8 bei Zielanflug entsprechen würde.

Wie beschrieben, werden dadurch beim Anflug auf die Zielumgebung 2 lediglich geringe Sichtwinkelabweichungen erwartet, da das tatsächliche Wirkmittelbild 9 näherungsweise dem zu erwartenden Wirkmittelbild 10 entsprechen wird.

Die in den Ausführungsbeispielen gezeigten Vorteile, Einzelheiten und Merkmale sind untereinander austauschbar, aufeinander übertragbar und miteinander kombinierbar.

## Patentansprüche

1. Vorrichtung (1) zur Zielübergabe von einem Aufklärungssystem (4), welches ein Bildaufnahmegerät zur Aufnahme eines Aufklärungsbilds (6) einer Zielumgebung (2) umfasst, an ein Wirkmittelsystem (5), welches ein Wirkmittel (8) mit einem Bildaufnahmegerät zur Aufnahme eines Wirkmittelbilds (9) der Zielumgebung (2) umfasst, wobei die Vorrichtung (1) dazu ausgebildet ist, ein in einem Aufklärungsbild (6) der Zielumgebung (2) erfasstes Ziel (3) an das Wirkmittelsystem (5) zu übergeben,
**dadurch gekennzeichnet, dass**
die Vorrichtung (1) eine Steuerungseinrichtung aufweist, die dazu ausgebildet ist,
a) vor Aussenden des Wirkmittels (8) anhand einer vorberechneten Trajektorie des Wirkmittels (8) ein zu erwartendes Wirkmittelbild (10) von der Zielumgebung (2) zu bestimmen, welches einem durch das Wirkmittel (8) des Wirkmittelsystems (5) erfassten Wirkmittelbild (9) bei einer tatsächlichen Annäherung des Wirkmittels (8) an die Zielumgebung (2) bei Aussenden des Wirkmittels (8) entsprechen würde und
b) die anhand des Aufklärungsbilds (6) bestimmten Zielkoordinaten des Ziels (3) in dem Aufklärungsbild (6) basierend auf einer Transformation in das entsprechend bestimmte, zu erwartende Wirkmittelbild (10) zu übertragen.

2. Vorrichtung (1) nach Anspruch 1,
**dadurch gekennzeichnet, dass**
die Steuerungseinrichtung dazu ausgebildet ist, die Transformation basierend auf einer bekannten Position und/oder Sichtlinie des Aufklärungssystems (4) bei Aufnahme des Aufklärungsbilds (6) und einer vorgegebenen Position und/oder Sichtlinie des Wirkmittels (8) des Wirkmittelsystems (5) bestimmt wird.

3. Vorrichtung (1) nach Anspruch 1 oder 2,
**dadurch gekennzeichnet, dass**
es sich bei der Transformation um eine affine Transformation, eine Homographie oder eine modellbasierte Transformation handelt.

4. Vorrichtung (1) nach Anspruch 3,
**dadurch gekennzeichnet, dass**
die modellbasierte Transformation basierend auf einem Geländemodell und/oder einem Höhenmodell bestimmt wird.

5. Vorrichtung (1) nach Anspruch 4,
**dadurch gekennzeichnet, dass**
bei der Transformation eine Registrierung des insbesondere zweidimensionalen, Aufklärungsbilds (6) in einem Geländemodell, insbesondere einem dreidimensionalen Facettenmodell, und eine Übertragung einer in dem Aufklärungsbild (6) markierten Zielkoordinate in das zu erwartende Wirkmittelbild (10) in dem Geländemodell erfolgt, wenn die Sichtlinien der Bildaufnahmegeräte von Aufklärungssystem (4) und Wirkmittel (8) bei aufgenommenem Aufklärungsbild (6) und zu erwartendem Wirkmittelbild (10) mehr als 15° voneinander abweichen.

6. Vorrichtung (1) nach einem der Ansprüche 2 - 4,
**dadurch gekennzeichnet, dass**
ein Modell, insbesondere ein Geländemodell, basierend auf wenigstens einem Beschaffenheitsparameter der Zielumgebung (2) bestimmt wird, insbesondere basierend auf Gebietsinformationen und/oder Höhendaten und/oder GPS-Daten und/oder Vermessungsdaten, insbesondere einer Lidar-Messung oder Satellitendaten oder historischen Daten.

7. Vorrichtung (1) nach einem der vorangehenden Ansprüche,
**dadurch gekennzeichnet, dass**
die Steuerungseinrichtung dazu ausgebildet ist, wenigstens einen Parameter des Aufklärungssystems (4) und des Wirkmittelsystems (5) anzugleichen, insbesondere die Sensorik, einen Öffnungswinkel und/oder eine Skalierung und/oder einen Spektralbereich.

8. Vorrichtung (1) nach einem der vorangehenden Ansprüche,
**dadurch gekennzeichnet, dass**
die Steuerungseinrichtung dazu ausgebildet ist, einen die Qualität der Zielübergabe beschreibenden Zuverlässigkeitsparameter zu bestimmen.

9. System umfassend ein Wirkmittelsystem (5) und eine Vorrichtung (1) nach einem der vorangehenden Ansprüche.

10. Verfahren zur Zielübergabe von einem Aufklärungssystem (4), welches ein Bildaufnahmegerät zur Aufnahme eines Aufklärungsbilds (6) einer Zielumgebung (2) ausgebildet ist, an ein Wirkmittelsystem (5), welches eine Wirkmittel (8) mit einem Bildaufnahmegerät zur Aufnahme eines Wirkmittelbilds (9) der Zielumgebung umfasst, wobei ein in einem Aufklärungsbild (6) der Zielumgebung (2) erfasstes Ziel (3) an das Wirkmittelsystem (5) übergeben wird,
**dadurch gekennzeichnet, dass**
a) vor Aussenden des Wirkmittels (8) anhand einer vorberechneten Trajektorie des Wirkmittels (8) ein zu erwartendes Wirkmittelbild (10) von der Zielumgebung (2) bestimmt wird, welches einem durch das Wirkmittelsystem (5) erfassten Wirkmittelbild (10) bei einer tatsächlichen Annäherung an die Zielumgebung (2) bei Aussenden des Wirkmittels entsprechen würde und
b) die anhand des Aufklärungsbilds (6) bestimmten Zielkoordinaten des Ziels (3) in dem Aufklärungsbild basierend auf einer Transformation in das entsprechend bestimmte, zu erwartende Wirkmittelbild (10) übertragen wird.
